# EUROPEAN PATENT APPLICATION

(11) **EP 4 332 915 A1**
(43) Date of publication of application: **06.03.2024**
(21) Application number: 23191294.0
(22) Date of filing: 14.08.2023
(51) Int. Cl.: G06V 20/69, G06V 10/82, G06V 10/764

(54) **AUTOMATED SELECTION AND MODEL TRAINING FOR CHARGED PARTICLE MICROSCOPE IMAGING**

(30) Priority: 31.08.2022 US 202217823661
(71) Applicant: FEI Company, Hillsboro, OR 97124-5793 (US)
(72) Inventor: FLANAGAN IV, John Francis, Hillsboro (US); KOHR, Holger, Eindhoven (NL); DENG, Yuchen, Eindhoven (NL); GROLLIOS, Fanis, Eindhoven (NL)
(74) Representative: Boult Wade Tennant LLP

(57) **Abstract**

Disclosed herein are CPM support systems, as well as related methods, computing devices, and computer-readable media. For example, in some embodiments, a method may comprise determining, based on selection data indicating selections of areas of microscopy imaging data, training data for a machine-learning model. The method may comprise training, based on the training data, the machine-learning model to automatically determine one or more areas of microscopy imaging data for performing at least one operation, such as high resolution data acquisition and data analysis. The method may comprise causing a computing device to be configured to use the machine-learning model to automatically determine areas of microscopy imaging data for the at least one operation.

## Description

### Background

Microscopy is the technical field of using microscopes to better view objects that are difficult to see with the naked eye. Different branches of microscopy include, for example, optical microscopy, charged particle (e.g., electron and/or ion) microscopy, and scanning probe microscopy. Charged particle microscopy involves using a beam of accelerated charged particles as a source of illumination. Types of charged particle microscopy include, for example, transmission electron microscopy, scanning electron microscopy, scanning transmission electron microscopy, and ion beam microscopy.

### Brief Description of the Drawings

Embodiments will be readily understood by the following detailed description in conjunction with the accompanying drawings. To facilitate this description, like reference numerals designate like structural elements. Embodiments are illustrated by way of example, not by way of limitation, in the figures of the accompanying drawings.
FIG. 1A is a block diagram of an example CPM support module for performing charged particle microscope (CPM) imaging support operations, in accordance with various embodiments.
FIG. 1B illustrates an example specimen that may be imaged by a CPM by the area selection techniques disclosed herein, in accordance with various embodiments.
FIG. 2A is a flow diagram of an example method of performing support operations, in accordance with various embodiments.
FIG. 2B is a flow diagram of an example method of performing support operations, in accordance with various embodiments.
FIG. 2C is a flow diagram of an example method of performing support operations, in accordance with various embodiments.
FIG. 3 is an example of a graphical user interface that may be used in the performance of some or all of the support methods disclosed herein, in accordance with various embodiments.
FIG. 4 is a block diagram of an example computing device that may perform some or all of the CPM support methods disclosed herein, in accordance with various embodiments.
FIG. 5 is a block diagram of an example CPM support system in which some or all of the CPM support methods disclosed herein may be performed, in accordance with various embodiments.
FIG. 6 is a diagram of a charged particle microscope (CPM) imaging process.
FIG. 7 shows an example CryoEM grid square image (left side) and individual cropped images taken from the example grid square (right side).
FIG. 8 is an example grid CryoEM grid square image showing selection of foil holes for further sample analysis.
FIG. 9 is an example grid CryoEM grid square image showing selection of a subsection of the image to determine a cropped image.
FIG. 10 is a block diagram of an example an example machine-learning model.
FIG. 11 shows an example user interface and related code snippet for label correction.
FIG. 12 is a diagram illustrating challenges related to noise in labels.
FIG. 13 shows an image with user selection of areas of a grid square.
FIG. 14 is another view of the image of FIG. 13 using the disclosed machine-learning model to automatically select areas of a grid square.
FIG. 15 is a histogram showing predictions of area selections.
FIG. 16 shows an example grid square image where the opacity of the circles (e.g., placed over foil holes) is used to represent the probability of selection per area, together with a few examples of (opacity, probability) pairs.
FIG. 17 is a diagram showing a first machine-learning model in accordance with the present techniques that operates as a convolutional neural network.
FIG. 18 is a diagram showing a second machine-learning model in accordance with the present techniques that operates a fully convolutional neural network.

### Detailed Description

Disclosed herein are apparatuses, systems, methods, and computer-readable media relating to area selection in charged particle microscope (CPM) imaging. For example, in some embodiments, a method may comprise determining, based on selection data indicating locations of selections (e.g., user selections, computer generated selections) of areas of microscopy imaging data, training data for a machine-learning model. The method may comprise training, based on the training data, the machine-learning model to automatically determine one or more areas of microscopy imaging data for performing at least one operation (e.g., processing operation, computer operation, data operation), such as data acquisition (e.g., of higher resolution data in the one or more areas determined), data analysis (e.g., the higher resolution data or the original data), or a combination thereof. The method may comprise causing a computing device to be configured to use the machine-learning model to automatically determine areas of microscopy imaging data for performing the at least one operation.

Another example method may comprise receiving microscopy imaging data and location data indicating sample locations relative to the microscopy imaging data. The method may comprise determining, based on the location data and a machine-learning model trained to determine target areas (e.g., optimal areas) for performing at least one operation, one or more areas of the microscopy imaging data for performing the at least one operation. The method may comprise causing display, on a display device, data indicative of the determined one or more areas of the microscopy imaging data.

Another example method may comprise generating, based on operating a microscopy device, microscopy imaging data and location data indicating sample locations relative to the microscopy imaging data. The method may comprise sending, to a computing device, the microscopy imaging data, and the location data, wherein the computing device comprises a machine-learning model configured (e.g., trained) to determine target areas (e.g., optimal areas) for performing at least one operation. The method may comprise receiving, from the computing device and based on the location data and a determination of the machine-learning model, data indicating one or more areas of the microscopy imaging data. The method may comprise causing at least one operation to be performed based on the data indicating one or more areas of the microscopy imaging data.

The embodiments disclosed herein thus provide improvements to CPM technology (e.g., improvements in the computer technology supporting CPM, among other improvements). The CPM support embodiments disclosed herein may achieve improved performance relative to conventional approaches. For example, conventional CPM requires an extensive amount of manual intervention by expert users to select areas-of-interest for detailed imaging. Thus, despite advances in CPM technology, the overall throughput of a CPM system has remained stagnant. The CPM support embodiments disclosed herein may improve accuracy and efficiency of a machine-learning model based on improvements in training data. The use of an automated area selection process also increases the efficiency of a CPM system in processing images by removing tasks that conventionally require human input. Additionally, the machine-learning model may be more efficient by conversion of the model to a fully convolutional neural network. The embodiments disclosed herein may be readily applied to a number of imaging applications, such as cryo-electron microscopy (cryo-EM), micro-crystal electron diffraction (MED), and tomography. The embodiments disclosed herein thus provide improvements to CPM technology (e.g., improvements in the computer technology supporting such CPMs, among other improvements).

In the following detailed description, reference is made to the accompanying drawings that form a part hereof wherein like numerals designate like parts throughout, and in which is shown, by way of illustration, embodiments that may be practiced. It is to be understood that other embodiments may be utilized, and structural or logical changes may be made, without departing from the scope of the present disclosure. Therefore, the following detailed description is not to be taken in a limiting sense.

Various operations may be described as multiple discrete actions or operations in turn, in a manner that is most helpful in understanding the subject matter disclosed herein. However, the order of description should not be construed as to imply that these operations are necessarily order dependent. In particular, these operations may be performed in an order different than presented. Operations described may be performed in a different order from the described embodiment. Various additional operations may be performed, and/or described operations may be omitted in additional embodiments.

For the purposes of the present disclosure, the phrases "A and/or B" and "A or B" mean (A), (B), or (A and B). For the purposes of the present disclosure, the phrases "A, B, and/or C" and "A, B, or C" mean (A), (B), (C), (A and B), (A and C), (B and C), or (A, B, and C). Although some elements may be referred to in the singular (e.g., "a processing device"), any appropriate elements may be represented by multiple instances of that element, and vice versa. For example, a set of operations described as performed by a processing device may be implemented with different ones of the operations performed by different processing devices.

The description uses the phrases "an embodiment," "various embodiments," and "some embodiments," each of which may refer to one or more of the same or different embodiments. Furthermore, the terms "comprising," "including," "having," and the like, as used with respect to embodiments of the present disclosure, are synonymous. When used to describe a range of dimensions, the phrase "between X and Y" represents a range that includes X and Y. As used herein, an "apparatus" may refer to any individual device, collection of devices, part of a device, or collections of parts of devices. The drawings are not necessarily to scale.

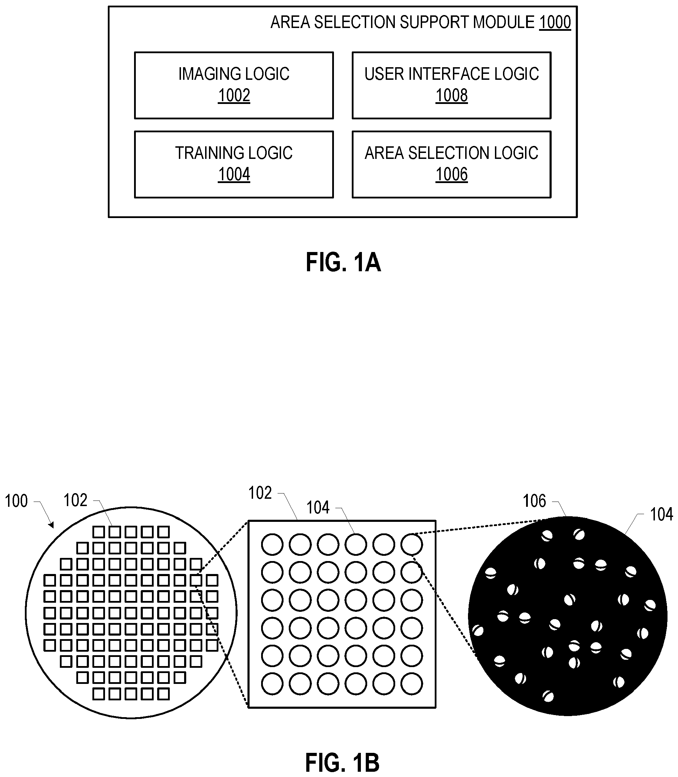

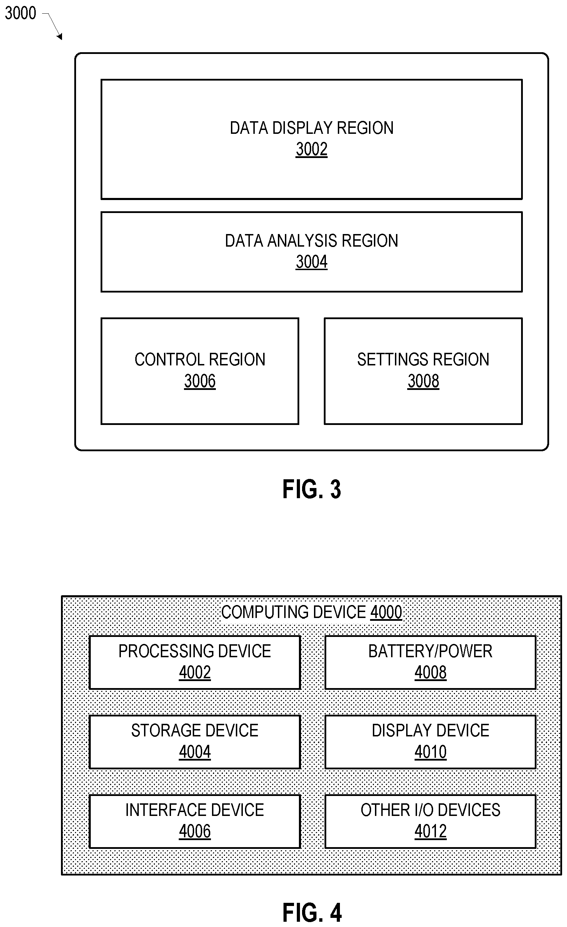

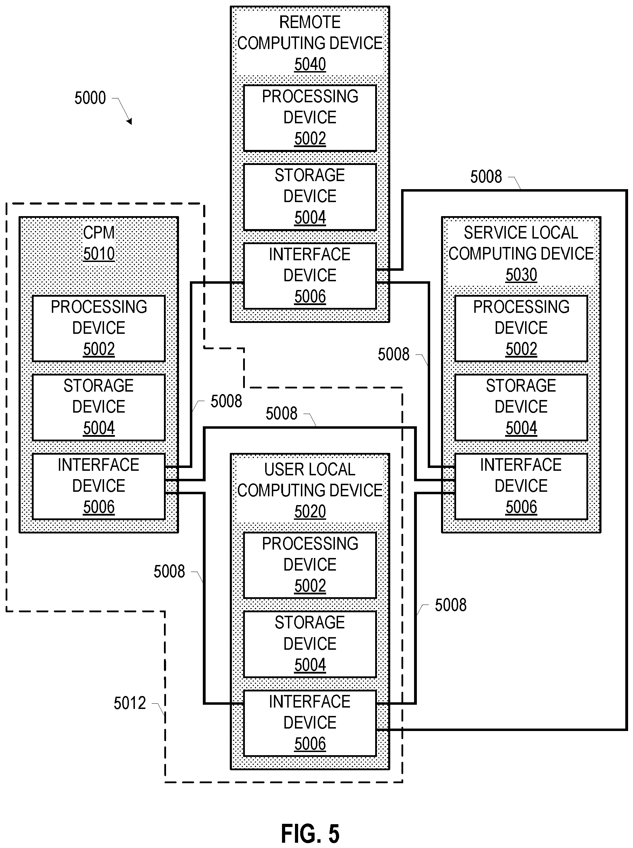

FIG. 1A is a block diagram of a CPM support module 1000 for performing support operations, in accordance with various embodiments. The CPM support module 1000 may be implemented by circuitry (e.g., including electrical and/or optical components), such as a programmed computing device. The logic of the CPM support module 1000 may be included in a single computing device, or may be distributed across multiple computing devices that are in communication with each other as appropriate. Examples of computing devices that may, singly or in combination, implement the CPM support module 1000 are discussed herein with reference to the computing device 4000 of FIG. 4, and examples of systems of interconnected computing devices, in which the CPM module 1000 may be implemented across one or more of the computing devices, is discussed herein with reference to the CPM support system 5000 of FIG. 5. The CPM whose operations are supported by the CPM support module 1000 may include any suitable type of CPM, such as a scanning electron microscope (SEM), a transmission electron microscope (TEM), a scanning transmission electron microscope (STEM), or an ion beam microscope.

The CPM support module 1000 may include imaging logic 1002, training logic 1004, area selection logic 1006, user interface logic 1008, or a combination thereof. As used herein, the term "logic" may include an apparatus that is to perform a set of operations associated with the logic. For example, any of the logic elements included in the CPM support module 1000 may be implemented by one or more computing devices programmed with instructions to cause one or more processing devices of the computing devices to perform the associated set of operations. In a particular embodiment, a logic element may include one or more non-transitory computer-readable media having instructions thereon that, when executed by one or more processing devices of one or more computing devices, cause the one or more computing devices to perform the associated set of operations. As used herein, the term "module" may refer to a collection of one or more logic elements that, together, perform a function associated with the module. Different ones of the logic elements in a module may take the same form or may take different forms. For example, some logic in a module may be implemented by a programmed general-purpose processing device, while other logic in a module may be implemented by an application-specific integrated circuit (ASIC). In another example, different ones of the logic elements in a module may be associated with different sets of instructions executed by one or more processing devices. A module may not include all of the logic elements depicted in the associated drawing; for example, a module may include a subset of the logic elements depicted in the associated drawing when that module is to perform a subset of the operations discussed herein with reference to that module.

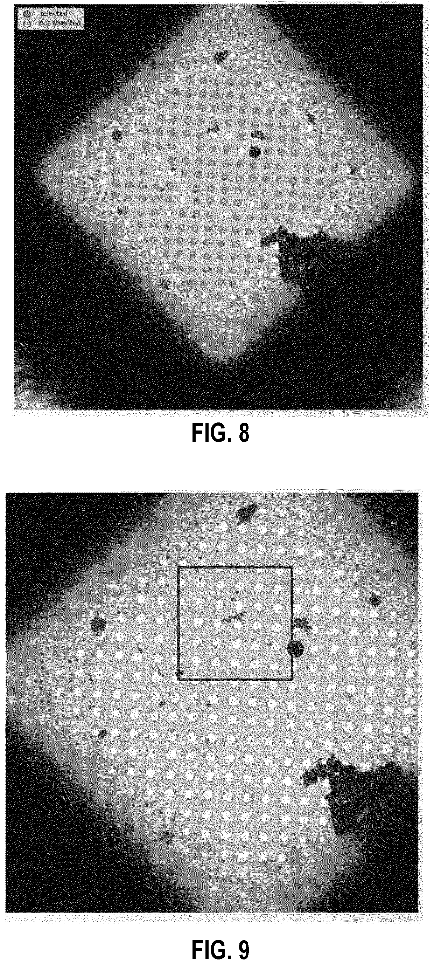

The imaging logic 1002 may generate microscopy imaging data and location data indicating sample locations relative to the microscopy imaging data. The microscopy imaging data and location data may be generated based on operating a microscopy device. The imaging logic 1002 may generate data sets associated with an area of a specimen by processing data from an imaging round of an area by a CPM (e.g., the CPM 5010 discussed below with reference to FIG. 9). In some embodiments, the imaging logic 1002 may cause a CPM to perform one or more imaging rounds of an area of a specimen.

In some embodiments, the imaging logic 1002 may be configured for cryo-electron microscopy (cryo-EM), and the specimen may be a cryo-EM sample like the cryo-EM sample 100 illustrated in FIG. 1B. The cryo-EM sample 100 of FIG. 1B may include a copper mesh grid (e.g., having a diameter between 1 millimeter and 10 millimeters) having square patches 102 of carbon thereon (e.g., or other material, such as gold). The carbon of the patches 102 may include holes 104 (e.g., having a diameter between 0.3 micron and 5 microns), and the holes 104 may have a thin layer of super-cooled ice 108 therein, in which elements-of-interest 106 (e.g., particles, such as protein molecules or other biomolecules) are embedded. The holes may be arranged in a regular or irregular pattern. In some embodiments, each of the holes 104 may serve as a different area to be analyzed by the CPM support module 1000 (e.g., to select the "best" one or more holes 104 in which to further investigate the elements-of-interest 106, as discussed below). This particular example of a specimen is simply illustrative, and any suitable specimen for a particular CPM may be used.

The training logic 1004 may train a machine-learning model to perform area selection. In some embodiments, the machine-learning computational model of the training logic 1004 may be a multi-layer neural network model. For example, the machine-learning computational model included in the training logic 1004 may have a residual network (ResNet) architecture that includes skip connections over one or more of the neural network layers. The training data (e.g., input images and parameter values) may be normalized in any suitable manner (e.g., using histogram equalization and mapping parameters to an interval, such as [0,1]). Other machine-learning computational models, such as other neural network models (e.g., dense convolutional neural network models or other deep convolutional neural network models, etc.).

The training logic 1004 may train the machine-learning model to automatically determine one or more areas of microscopy imaging data for performing at least one operation (e.g., data operation, processing operation). The training logic 1004 may train, based on training data, the machine-learning model to automatically determine one or more areas of microscopy imaging data for performing at least one operation. The at least one operation may comprise a data acquisition operation, such as obtaining a higher resolution image than an image input to the machine-learning model. The at least one operation may comprise a data analysis operation (e.g., analysis of the higher resolution image data acquired).

Training data for the machine-learning model may be based on selection data indicating selections (e.g., user selections, computer generated selections) of areas of microscopy imaging data. The selection data may comprise location information (e.g., coordinates, pixels, distance, meters) indicating locations of selected holes of a plurality of holes of a section of a grid mesh. Selection data may be received (e.g., collected) from one or more storage locations associated with one or more microscopes, users, samples, and/or the like. As an example, the location information may comprise image pixel coordinates. The image pixel coordinates may be with respect to an overview image (e.g., grid square image) in which all possible selections are shown. The overview image may be a single image or a combination of multiple images titles (e.g., added edge to edge or otherwise combined). The selection data may be used by the machine-learning model to generate filters for selection of features in the microscopy in the microscopy images, non-selection of features in the microscopy images, or a combination thereof.

The training logic 1004 may augment the imaging data and/or selection data based on one or more augmentation processes. The augmentation processes may include generating, based on modifying a microscopy image (e.g., of the selection data), a plurality of training images. The one or more augmentation processes may include determining a first crop of a microscopy image. A microscopy image (e.g., a section thereof, such as a grid square) may be cropped into a plurality of cropped images. Each of the cropped images may be used as a separate example for training the machine-learning model. The first cropped image may be cropped based on a hole in a grid square. The coordinate for the hole may be the center of the cropped image. The cropped image may include an area around the hole, such as several other holes. The plurality of cropped images may be generated (e.g., created) by generating a cropped image for each of the holes (e.g., or based on some other feature). The one or more augmentation processes may include modifying at least a portion of image data in the first crop (e.g., and each cropped image). The modified image may be further cropped as a second cropped image (e.g., after modification). The second cropped image (e.g., each of the second cropped images) may be used as a separate example for training the machine-learning model.

Modifying the microscopy image may comprise one or more of rotating, scaling, translating, applying a point spread function, or applying Poisson noise. Modifying the microscopy image may comprise zooming in or out to emulate different hole sizes. Modifying the microscopy image may comprise applying an optical transform to change focus, the microscopy image, and/or otherwise transform the original microscopy image.

The training logic 1004 may normalize at least a portion of the training data. A histogram of image intensity data of the training data (e.g., of an image, a select grid square, and/or a cropped image) may be determined. A normalization factor may be determined based on a percentage of the histogram (e.g., 90 percent). The training data (e.g., images, portions of images, before or after the augmentation process) may be normalized based on the normalization factor.

The training logic 1004 may generate one or more of a neural network, a convolutional neural network, or a fully convolutional neural network. The machine-learning model may generate a fully convolutional neural network by converting and/or modifying a convolutional neural network. First, the training logic 1004 may generate a convolutional neural network. After generating the convolutional neural network, the fully convolutional neural network may be generated based on the convolutional neural network. The fully convolutional neural network may be generated by replacing (e.g., in the original neural network, or in a copy of the neural network) one or more layers, such replacing a global pooling layer and fully connected layer of the convolutional neural network with an average pooling layer and a convolution layer. Weight values (e.g., or bias values) may be copied from a first layer (e.g., dense layer, global pooling layer, fully connected layer) of the convolutional neural network to a second layer replacing, at least in part, the first layer (e.g., or replacing a copy of the first layer). The first layer and the second layer may both belong to a same or similar structure in corresponding neural networks. The first layer may belong to a different neural network (e.g., the convolutional neural network) than the second layer (e.g., the fully convolutional neural network). For example, weight values (e.g., or bias values) may be copied from fully connected layers to corresponding 1x1 convolutional layers. Layers that may be copied may comprise anything but the last (e.g., in order of processing) layer of a neural network. It should be understood that the terms "first" and "second" when referring to layers do not necessarily imply any relationship of order.

Upon completion of training, the machine-learning model may be trained and/or configured to provide an indication of whether an area is selected or not selected for analysis. The indication may comprise one of a binary value, or a value in a range (e.g., from 0 to 1). The training logic 1004 may cause a computing device to be configured to use the machine-learning model to automatically determine one or more areas of microscopy imaging data for performing at least one operation. The at least one operation may comprise a data acquisition operation, such as obtaining a higher resolution image than an image input to the machine-learning model. The at least one operation may comprise a data analysis operation (e.g., analysis of the higher resolution image data acquired). For example, the training logic 1004 may send the machine-learning model to a storage location, to another computing device, and/or the like.

The area selection logic 1006 may determine one or more areas of microscopy imaging data for performing at least one operation, such as additional data acquisition, data analysis (e.g., or the additional data acquisition, of the original image processed by the machine-learning model). For example, a lower resolution image may be used for determining the one or more areas. Then, one or more higher resolution images may be taken of the one or more areas of microscopy imaging data. The one or more higher resolution images may be analyzed (e.g., to determine information about a material in the imaging data, and/or other analysis). The area selection logic 1006 may determine one or more areas of the microscopy imaging data for performing the at least one operation based on a machine-learning model trained to determine target areas for performing the at least one operation. A target area for analysis may be an area free of contamination, an area with thin ice, an area containing biological particles, or a combination thereof that would contribute to high resolution cryo-EM structure(s).

In embodiments, the area selection logic 1006 may receive the microscopy imaging data and location data indicating sample locations (e.g., hole locations) relative to the microscopy imaging data. The microscopy imaging data and location data may be received by a first computing device from a second computing device. The microscopy imaging data and location data may be received via one or more of a network or a storage device. The microscopy imaging data and location data may be received in response to an operation of a microscopy device. The operation of the microscopy device may comprise charged particle microscopy image acquisition. The location data may comprise coordinates of holes in a grid section of a grid mesh.

The user interface logic 1008 may cause display, on a display device, data indicative of the determined one or more areas of the microscopy imaging data. Causing display may comprise sending, via a network to the display device, the data indicative of the determined one or more areas of the microscopy imaging data. The data indicative of the determined one or more areas of the microscopy imaging data may comprise a map indicating varying probabilities of locations being targets for analysis (e.g., if the machine-learning model is a convolutional or fully convolutional neural network). The data indicative of the determined one or more areas of the microscopy imaging data may comprise an indication of a subset of holes, in the one or more areas, of a plurality of holes in a grid section of a mesh grid (e.g., if the machine-learning model is a convolutional neural network).

The user interface logic 1008 may cause at least one operation to be performed based on the data indicative of the determined one or more areas of the microscopy imaging data. Causing the at least one operation to be performed may comprise using the one or more areas to perform one or more of data acquisition of higher resolution data than the microscopy imaging data, particle analysis (e.g., based on the higher resolution data), single particle analysis, generation of a representation of one or more particles. The causing the at least one operation to be performed may comprise causing one or more of storage of or transmission via a network of the data indicating one or more areas of the microscopy imaging data. The causing the at least one operation to be performed may comprise causing output, via the display device, of results of analyzing data (e.g., the higher resolution data, and/or the microscopy imaging data) associated with the one or more areas.

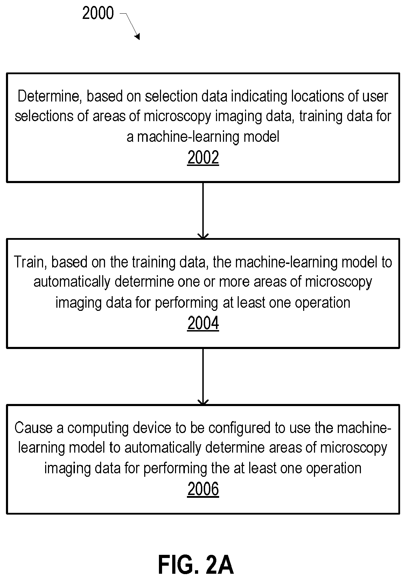

FIG. 2A is a flow diagram of a method 2000 of performing support operations, in accordance with various embodiments. Although the operations of the method 2000 may be illustrated with reference to particular embodiments disclosed herein (e.g., the CPM support modules 1000 discussed herein with reference to FIG. 1A, the GUI 3000 discussed herein with reference to FIG. 3, the computing devices 4000 discussed herein with reference to FIG. 4, and/or the CPM support system 5000 discussed herein with reference to FIG. 5), the method 2000 may be used in any suitable setting to perform any suitable support operations. Operations are illustrated once each and in a particular order in FIG. 2A, but the operations may be reordered and/or repeated as desired and appropriate (e.g., different operations performed may be performed in parallel, as suitable).

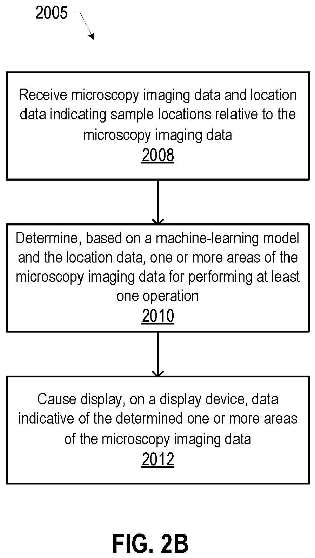

The method 2000 may comprise a computer implemented method for providing a service for automated selection of areas of an image. A system and/or computing environment, such as the CPM support module 1000 of FIG. 1A, the GUI 3000 of FIG. 3, the computing device 4000 of FIG. 4, and/or CPM support system 5000 may be configured to perform the method 2000. For example, any device separately or a combination of devices of the scientific instrument (e.g., the CPM system) 5010, the user local computing device 5020, the service local computing device, and the remote computing device 5040 may perform the method 2000. Any of the features of the methods of FIGs. 2B-2C may be combined with any of the features and/or steps of the method 2000 of FIG. 2A.

At step 2002, training data for a machine-learning model may be determined. The training data for the machine-learning model may be determined based on selection data indicating selections (e.g., user selections, computer generated selections) of areas of microscopy imaging data. The selection data may comprise coordinates of selected holes of a plurality of holes of a section of a grid mesh. At least a portion of the training data may be generated using a variety of techniques, such as manual annotation by an expert, by using an algorithm, or a combination thereof.

The determining the training data may comprise generating, based on modifying a microscopy image, a plurality of training images. The modifying the microscopy image may comprise one or more of rotating, scaling, translating, applying a point spread function, or applying Poisson noise. The modifying the microscopy image may comprise zooming in or out to emulate different hole sizes. The modifying the microscopy image may comprise applying an optical transform to one of change focus or blur the microscopy image. The determining the training data may comprise determining a histogram of image intensity data of the training data, determining a normalization factor based on a percentage of the histogram, normalizing the training data based on the normalization factor, or a combination thereof. The determining the training data may comprise determining a first crop of a microscopy image, modifying at least a portion of image data in the first crop, and determining a second crop of the first crop.

At step 2004, the machine-learning model may be trained to automatically determine one or more areas of microscopy imaging data for performing at least one operation. The at least one operation may comprise a data acquisition operation, such as obtaining a higher resolution image than an image (e.g., the microscopy imaging data) input to the machine-learning model for determining the one or more areas. The at least one operation may comprise a data analysis operation (e.g., analysis of the higher resolution image data acquired). The machine-learning model may be trained to automatically determine one or more areas of microscopy imaging data for performing the at least one operation based on the training data. The machine-learning model may comprise one or more of a neural network or a fully convolutional neural network. The machine-learning model may be converted from a convolutional neural network to a fully convolutional neural network. The converting the machine-learning model may be after training of the machine-learning model. The converting the machine-learning model may comprise replacing a global pooling layer and a fully connected layer of the convolutional neural network with an average pooling layer and a convolution layer. The converting the machine-learning model may comprise copying weight values (e.g., or bias values) from a first layer of the convolutional neural network to a second layer replacing, at least in part, the first layer. For example, weight values from one or more fully connected layers may be copied to one or more corresponding 1x1 convolutional layers. The areas of the microscopy imaging data each may comprise a single foil hole. The one or more of the areas of the microscopy imaging data each may comprise a plurality of holes in a grid section of a grid mesh. The machine-learning model may be trained to generate a map of varying probabilities of locations being targets for analysis. The machine-learning model may be trained to provide an indication of whether an area is selected or not selected for analysis.

At step 2006, a computing device may be caused to be configured to use the machine-learning model to automatically determine one or more areas of microscopy imaging data for performing the at least one operation. Data indicative of and/or comprising the machine-learning model may be sent to a storage location, another computing device, a hosting service (e.g., for hosted computing, hosted machine-learning), and/or the like. A software application (e.g., on a server, on a computing device in communication with a CPM, an application integrated into the CPM) may be updated to be configured to use the machine-learning model. An update the application may be sent to one or more locations for usage of the machine-learning model.

FIG. 2B is a flow diagram of a method 2005 of performing support operations, in accordance with various embodiments. Although the operations of the method 2005 may be illustrated with reference to particular embodiments disclosed herein (e.g., the CPM support modules 1000 discussed herein with reference to FIG. 1A, the GUI 3000 discussed herein with reference to FIG. 3, the computing devices 4000 discussed herein with reference to FIG. 4, and/or the CPM support system 5000 discussed herein with reference to FIG. 5), the method 2005 may be used in any suitable setting to perform any suitable support operations. Operations are illustrated once each and in a particular order in FIG. 2B, but the operations may be reordered and/or repeated as desired and appropriate (e.g., different operations performed may be performed in parallel, as suitable).

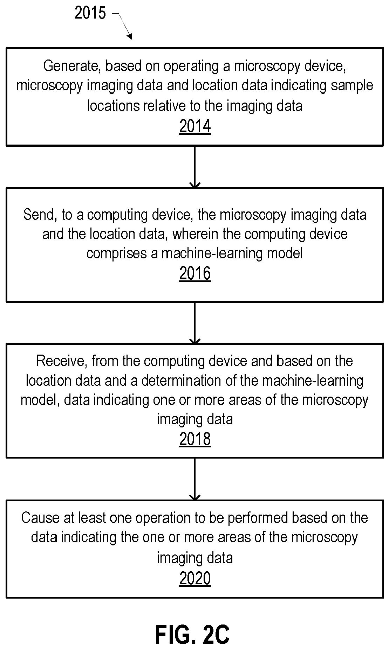

The method 2005 may comprise a computer implemented method for providing a service for automated selection of areas of an image. A system and/or computing environment, such as the CPM support module 1000 of FIG. 1A, the GUI 3000 of FIG. 3, the computing device 4000 of FIG. 4, and/or CPM support system 5000 may be configured to perform the method 2005. For example, any device separately or a combination of devices of the scientific instrument (e.g., the CPM system) 5010, the user local computing device 5020, the service local computing device, and the remote computing device 5040 may perform the method 2005. Any of the features of the methods of FIGs. 2A and 2C may be combined with any of the features and/or steps of the method 2005 of FIG. 2B.

At step 2008, microscopy imaging data may be received. Location data indicating sample locations relative to the microscopy imaging data may be received (e.g., with the microscopy imaging data, or separately). The microscopy imaging data and/or location data may be received by a first computing device from a second computing device. The microscopy imaging data and/or location data may be received via one or more of a network or a storage device. The microscopy imaging data and/or location data may be received in response to an operation of a microscopy device. The operation of the microscopy device may comprise charged particle microscopy image acquisition. The location data may comprise coordinates of holes in a grid section of a grid mesh.

At step 2010, one or more areas of the microscopy imaging data for performing at least one operation may be determined. The at least one operation may comprise a data acquisition operation, such as obtaining a higher resolution image than an image input to the machine-learning model. The at least one operation may comprise a data analysis operation (e.g., analysis of the higher resolution image data acquired). The one or more areas of the microscopy imaging data for performing at least one operation may be determined based on a machine-learning model, the location data, the microscopy imaging data, or a combination thereof. For example, the microscopy imaging data and/or the location data may be input to the machine-learning model. In some scenarios, the location data may be used to generate a plurality of sub-images (e.g., by using coordinates to identify specific locations of holes and then cropping a small area around the hole) of the microscopy imaging data. A sub-image may represent (e.g., be centered at) an individual foil hole of a plurality of foil holes of the microscopy imaging data. Each sub-image may be input to the machine-learning model separately for a determination on which sub-image is determined as selected or not selected. As another example, the machine-learning model may receive an entire image and use the location data to determine individual areas for analysis. The machine-learning model may be trained (e.g., or configured) to determine target areas for performing the at least one operation. The machine-learning model may be trained (e.g., configured) based on selection data indicating selections (e.g., user selections, computer generated selections based on algorithm) of areas of microscopy imaging data. The selection data may comprise location information, such as coordinates of selected holes in a section of a grid mesh.

The machine-learning model may be trained (e.g., configured) based on automatically generated training data. The automatically generated training data may comprise a plurality of training images generated based on modifying a microscopy image. Modifying the microscopy image may comprise one or more of rotating, scaling, translating, applying a point spread function, or applying Poisson noise. Modifying the microscopy image may comprise zooming in or out to emulate different hole sizes. Modifying the microscopy image may comprise applying an optical transform to change focus of microscopy image, blur the microscopy image, and/or otherwise transform the image. The automatically generated training data may comprise normalized training data. The normalized training data may be normalized based on determining a histogram of image intensity data of the training data, determining a normalization factor based on a percentage of the histogram, and normalizing the training data based on the normalization factor. The automatically generated training data may comprise cropped training data. The cropped training data may be cropped based on determining a first crop of a microscopy image, modifying at least a portion of image data in the first crop, determining a second crop of the first crop, or a combination thereof.

The machine-learning model may comprise one or more of a neural network or a fully convolutional neural network. The machine-learning model may comprise a fully convolutional neural network converted from a convolutional neural network. The machine-learning model may be converted to the fully convolutional neural network after training of the machine-learning model. The machine-learning model may be converted to the fully convolutional neural network based on replacing a global pooling layer and fully connected layer of the convolutional neural network with an average pooling layer and a convolution layer. The machine-learning model may be converted to the fully convolutional neural network based on copying weight values (e.g., or bias values) from a first layer of the convolutional neural network to a second layer replacing, at least in part, the first layer. For example, weight values from fully connected layers may be copied to corresponding 1x1 convolutional layers.

The one or more areas of the microscopy imaging data may be each only a single hole of a plurality of holes in a grid section of a mesh grid. The one or more of the areas of the microscopy imaging data each may comprise a plurality of holes in a grid section of a mesh grid. The machine-learning model may be trained (e.g., configured) to generate a map indicating varying probabilities of locations being targets for analysis. The machine-learning model may be trained (e.g., configured) to provide an indication of whether an area is selected or not selected for analysis.

At step 2012, display of data indicative of the determined one or more areas of the microscopy imaging data may be caused. The display may be caused on a display device. The causing display may comprise sending, via a network to the display device, the data indicative of the determined one or more areas of the microscopy imaging data. The data indicative of the determined one or more areas of the microscopy imaging data may comprise a map indicating varying probabilities of locations being targets for analysis. The data indicative of the determined one or more areas of the microscopy imaging data may comprise an indication of a subset of holes, in the one or more areas, of a plurality of holes in a grid section of a mesh grid.

FIG. 2C is a flow diagram of a method 2015 of performing support operations, in accordance with various embodiments. Although the operations of the method 2015 may be illustrated with reference to particular embodiments disclosed herein (e.g., the CPM support modules 1000 discussed herein with reference to FIG. 1A, the GUI 3000 discussed herein with reference to FIG. 3, the computing devices 4000 discussed herein with reference to FIG. 4, and/or the CPM support system 5000 discussed herein with reference to FIG. 5), the method 2015 may be used in any suitable setting to perform any suitable support operations. Operations are illustrated once each and in a particular order in FIG. 2C, but the operations may be reordered and/or repeated as desired and appropriate (e.g., different operations performed may be performed in parallel, as suitable).

The method 2015 may comprise a computer implemented method for providing a service for automated selection of areas of an image. A system and/or computing environment, such as the CPM support module 1000 of FIG. 1A, the GUI 3000 of FIG. 3, the computing device 4000 of FIG. 4, and/or CPM support system 5000 may be configured to perform the method 2015. For example, any device separately or a combination of devices of the scientific instrument (e.g., the CPM system) 5010, the user local computing device 5020, the service local computing device, and the remote computing device 5040 may perform the method 2015. Any of the features of the methods of FIGs. 2A and 2B may be combined with any of the features and/or steps of the method 2015 of FIG. 2C.

At step 2014, microscopy imaging data and location data indicating sample locations relative to the microscopy imaging data may be generated. The microscopy imaging data and location data indicating sample locations relative to the microscopy imaging data may be generated based on operating a microscopy device. The generating the microscopy imaging data may comprise performing charged particle microscopy on a sample comprised in (e.g., located in) a mesh grid comprising one or more sections of a plurality of holes.

At step 2016, the microscopy imaging data and the location data may be sent. The microscopy imaging data and the location data may be sent to a computing device. The computing device may comprise a machine-learning model trained to determine target areas for performing at least one operation (e.g., data operation, acquisition operation, analysis operation). The at least one operation may comprise a data acquisition operation, such as obtaining a higher resolution image than an image input to the machine-learning model. The at least one operation may comprise a data analysis operation (e.g., analysis of the higher resolution image data acquired). The machine-learning model may be trained (e.g., configured) based on selection data indicating selections (e.g., user selections, computer generated selections based on algorithm) of areas of microscopy imaging data. The selection data may comprise location information, such as coordinates of selected holes in a section of a grid mesh.

The machine-learning model may be trained (e.g., configured) based on automatically generated training data. The automatically generated training data may comprise a plurality of training images generated based on modifying a microscopy image. Modifying the microscopy image may comprise one or more of rotating, scaling, translating, applying a point spread function, or applying Poisson noise. Modifying the microscopy image may comprise zooming in or out to emulate different hole sizes. Modifying the microscopy image may comprise applying an optical transform to one of change focus or blur the microscopy image.

The automatically generated training data may comprise normalized training data. The normalized training data may be normalized based on determining a histogram of image intensity data of the training data, determining a normalization factor based on a percentage of the histogram, normalizing the training data based on the normalization factor, or a combination thereof. The automatically generated training data may comprise cropped training data. The cropped training data may be cropped based on determining a first crop of a microscopy image, modifying at least a portion of image data in the first crop, determining a second crop of the first crop, or a combination thereof.

The machine-learning model may comprise one or more of a neural network or a fully convolutional neural network. The machine-learning model may comprise a fully convolutional neural network converted from a convolutional neural network. The machine-learning model may be converted to the fully convolutional neural network after training of the machine-learning model. The machine-learning model may be converted to the fully convolutional neural network based on replacing a global pooling layer and fully connected layer of the convolutional neural network with an average pooling layer and a convolution layer. The machine-learning model may be converted to the fully convolutional neural network based on copying weight values (e.g., or bias values) from a first layer of the convolutional neural network to a second layer replacing, at least in part, the first layer. For example, weight values from fully connected layers may be copied to corresponding 1x1 convolutional layers. The one or more areas of the microscopy imaging data may be each only a single hole of a plurality of holes in a grid section of a mesh grid. The one or more of the areas of the microscopy imaging data each may comprise a plurality of holes in a grid section of a mesh grid. The machine-learning model may be trained (e.g., configured) to generate a map indicating varying probabilities of locations as targets (e.g., being optimal) for performing at least one operation (e.g., data operation, acquisition operation, analysis operation). The machine-learning model may be trained (e.g., configured) to provide an indication of whether an area is selected or not selected for performing the at least one operation.

At step 2018, data indicating one or more areas of the microscopy imaging data may be received. The data indicating one or more areas of the microscopy imaging data may be received from the computing device and based on a determination of the machine-learning model. The receiving the data may be in response to sending the microscopy imaging data and the location data. The data indicating one or more areas of the microscopy imaging data may comprise a map indicating varying probabilities of locations being targets (e.g., optimal) for analysis. The data indicating one or more areas of the microscopy imaging data may comprise an indication of a subset of holes, in the one or more areas, of a plurality of holes in a grid section of a mesh grid.

At step 2020, the at least one operation may be caused to be performed. The at least one operation may be performed based on the data indicating one or more areas of the microscopy imaging data. The causing the at least one operation to be performed may comprise using the one or more areas to perform one or more of data acquisition of higher resolution data (e.g., imaging data) than the microscopy imaging data, particle analysis (e.g., of the higher resolution data), single particle analysis, generation of a representation of one or more particles. The causing the at least one operation to be performed may comprise causing one or more of storage of or transmission via a network of the data indicating one or more areas of the microscopy imaging data. The causing the at least one operation to be performed may comprise causing output, via a display device, of results of analyzing the one or more areas of the microscopy imaging data.

The CPM support methods disclosed herein may include interactions with a human user (e.g., via the user local computing device 5020 discussed herein with reference to FIG. 5). These interactions may include providing information to the user (e.g., information regarding the operation of a scientific instrument such as the CPM 5010 of FIG. 5, information regarding a sample being analyzed or other test or measurement performed by a scientific instrument, information retrieved from a local or remote database, or other information) or providing an option for a user to input commands (e.g., to control the operation of a scientific instrument such as the CPM 5010 of FIG. 5, or to control the analysis of data generated by a scientific instrument), queries (e.g., to a local or remote database), or other information. In some embodiments, these interactions may be performed through a graphical user interface (GUI) that includes a visual display on a display device (e.g., the display device 4010 discussed herein with reference to FIG. 4) that provides outputs to the user and/or prompts the user to provide inputs (e.g., via one or more input devices, such as a keyboard, mouse, trackpad, or touchscreen, included in the other I/O devices 4012 discussed herein with reference to FIG. 4). The CPM support systems disclosed herein may include any suitable GUIs for interaction with a user.

FIG. 3 depicts an example GUI 3000 that may be used in the performance of some or all of the support methods disclosed herein, in accordance with various embodiments. As noted above, the GUI 3000 may be provided on a display device (e.g., the display device 4010 discussed herein with reference to FIG. 4) of a computing device (e.g., the computing device 4000 discussed herein with reference to FIG. 4) of a CPM support system (e.g., the CPM support system 5000 discussed herein with reference to FIG. 5), and a user may interact with the GUI 3000 using any suitable input device (e.g., any of the input devices included in the other I/O devices 4012 discussed herein with reference to FIG. 4) and input technique (e.g., movement of a cursor, motion capture, facial recognition, gesture detection, voice recognition, actuation of buttons, etc.).

The GUI 3000 may include a data display region 3002, a data analysis region 3004, a scientific instrument control region 3006, and a settings region 3008. The particular number and arrangement of regions depicted in FIG. 3 is simply illustrative, and any number and arrangement of regions, including any desired features, may be included in a GUI 3000.

The data display region 3002 may display data generated by a scientific instrument (e.g., the CPM 5010 discussed herein with reference to FIG. 5). For example, the data display region 3002 may display microscopy imaging data generated by the imaging logic 1002 for different areas of a specimen (e.g., the graphical representation as shown in FIGs. 1B, and 6-7).

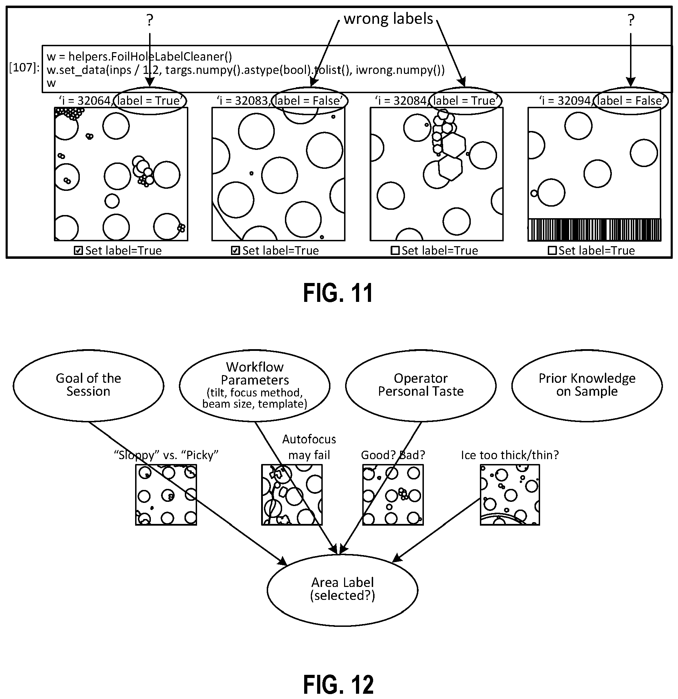

The data analysis region 3004 may display the results of data analysis (e.g., the results of acquiring and/or analyzing the data illustrated in the data display region 3002 and/or other data). For example, the data analysis region 3004 may display the one or more areas determined for performing the at least one operation (e.g., as generated by the area section logic 1006). The data analysis region 3002 may cause acquisition of higher resolution imaging data in the one or more areas determined for performing the at least one operation. For example, the data analysis region 3004 may display a graphical representation like the graphical representation 170 of FIGs. 8, 13-14, and 16. The data analysis region 3004 may display an interface for modifying training data, such as an interface for defining parameters for how many training images to generate, parameters for controlling modifying operations, and/or the like. Label correction options may be displayed, such as those shown in FIG. 11. In some embodiments, the data display region 3002 and the data analysis region 3004 may be combined in the GUI 3000 (e.g., to include data output from a scientific instrument, and some analysis of the data, in a common graph or region).

The scientific instrument control region 3006 may include options that allow the user to control a scientific instrument (e.g., the CPM 5010 discussed herein with reference to FIG. 5). For example, the scientific instrument control region 3006 may include user-selectable options to select and/or train machine-learning computational model, generate a new machine-learning computational model from a previous machine-learning computational model, or perform other control functions (e.g., confirming or updating the output of the area selection logic 1006 to control the areas to be analyzed).

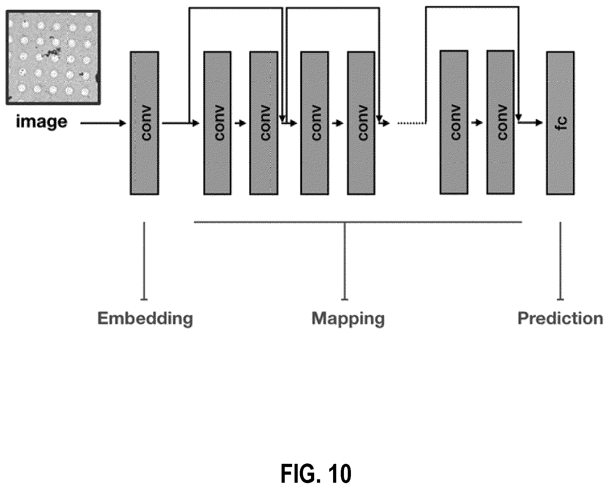

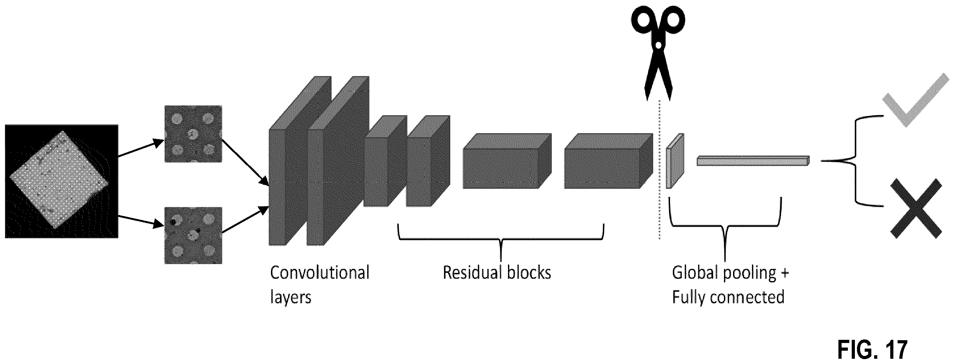

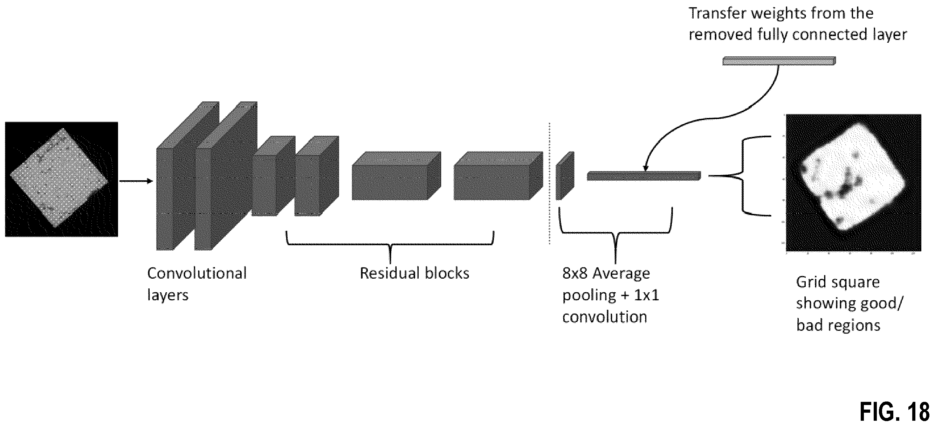

The settings region 3008 may include options that allow the user to control the features and functions of the GUI 3000 (and/or other GUIs) and/or perform common computing operations with respect to the data display region 3002 and data analysis region 3004 (e.g., saving data on a storage device, such as the storage device 4004 discussed herein with reference to FIG. 4, sending data to another user, labeling data, etc.). For example, the settings region 3008 may include options for selection of a machine-learning model. The user may select the machine-learning model from among a convolutional neural network (e.g., shown in FIG. 10, FIG. 17) and a fully convolutional neural network (e.g., shown in FIG. 18). The user may select a threshold (e.g., a number between 0 and 1). The user may adjust a slider to select the threshold. Adjustment of the threshold may cause an image showing selected areas to be updated with changes in the selections.

As noted above, the CPM support module 1000 may be implemented by one or more computing devices. FIG. 4 is a block diagram of a computing device 4000 that may perform some or all of the CPM support methods disclosed herein, in accordance with various embodiments. In some embodiments, the CPM support module 1000 may be implemented by a single computing device 4000 or by multiple computing devices 4000. Further, as discussed below, a computing device 4000 (or multiple computing devices 4000) that implements the CPM support module 1000 may be part of one or more of the CPM 5010, the user local computing device 5020, the service local computing device 5030, or the remote computing device 5040 of FIG. 5.

The computing device 4000 of FIG. 4 is illustrated as having a number of components, but any one or more of these components may be omitted or duplicated, as suitable for the application and setting. In some embodiments, some or all of the components included in the computing device 4000 may be attached to one or more motherboards and enclosed in a housing (e.g., including plastic, metal, and/or other materials). In some embodiments, some these components may be fabricated onto a single system-on-a-chip (SoC) (e.g., an SoC may include one or more processing devices 4002 and one or more storage devices 4004). Additionally, in various embodiments, the computing device 4000 may not include one or more of the components illustrated in FIG. 4, but may include interface circuitry (not shown) for coupling to the one or more components using any suitable interface (e.g., a Universal Serial Bus (USB) interface, a High-Definition Multimedia interface (HDMI) interface, a Controller Area Network (CAN) interface, a Serial Peripheral interface (SPI) interface, an Ethernet interface, a wireless interface, or any other appropriate interface). For example, the computing device 4000 may not include a display device 4010, but may include display device interface circuitry (e.g., a connector and driver circuitry) to which a display device 4010 may be coupled.

The computing device 4000 may include a processing device 4002 (e.g., one or more processing devices). As used herein, the term "processing device" may refer to any device or portion of a device that processes electronic data from registers and/or memory to transform that electronic data into other electronic data that may be stored in registers and/or memory. The processing device 4002 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable processing devices.

The computing device 4000 may include a storage device 4004 (e.g., one or more storage devices). The storage device 4004 may include one or more memory devices such as random access memory (RAM) (e.g., static RAM (SRAM) devices, magnetic RAM (MRAM) devices, dynamic RAM (DRAM) devices, resistive RAM (RRAM) devices, or conductive-bridging RAM (CBRAM) devices), hard drive-based memory devices, solid-state memory devices, networked drives, cloud drives, or any combination of memory devices. In some embodiments, the storage device 4004 may include memory that shares a die with a processing device 4002. In such an embodiment, the memory may be used as cache memory and may include embedded dynamic random access memory (eDRAM) or spin transfer torque magnetic random access memory (STT-MRAM), for example. In some embodiments, the storage device 4004 may include non-transitory computer readable media having instructions thereon that, when executed by one or more processing devices (e.g., the processing device 4002), cause the computing device 4000 to perform any appropriate ones of or portions of the methods disclosed herein.

The computing device 4000 may include an interface device 4006 (e.g., one or more interface devices 4006). The interface device 4006 may include one or more communication chips, connectors, and/or other hardware and software to govern communications between the computing device 4000 and other computing devices. For example, the interface device 4006 may include circuitry for managing wireless communications for the transfer of data to and from the computing device 4000. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. Circuitry included in the interface device 4006 for managing wireless communications may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). In some embodiments, circuitry included in the interface device 4006 for managing wireless communications may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. In some embodiments, circuitry included in the interface device 4006 for managing wireless communications may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). In some embodiments, circuitry included in the interface device 4006 for managing wireless communications may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. In some embodiments, the interface device 4006 may include one or more antennas (e.g., one or more antenna arrays) to receipt and/or transmission of wireless communications.

In some embodiments, the interface device 4006 may include circuitry for managing wired communications, such as electrical, optical, or any other suitable communication protocols. For example, the interface device 4006 may include circuitry to support communications in accordance with Ethernet technologies. In some embodiments, the interface device 4006 may support both wireless and wired communication, and/or may support multiple wired communication protocols and/or multiple wireless communication protocols. For example, a first set of circuitry of the interface device 4006 may be dedicated to shorter-range wireless communications such as Wi-Fi or Bluetooth, and a second set of circuitry of the interface device 4006 may be dedicated to longer-range wireless communications such as global positioning system (GPS), EDGE, GPRS, CDMA, WiMAX, LTE, EV-DO, or others. In some embodiments, a first set of circuitry of the interface device 4006 may be dedicated to wireless communications, and a second set of circuitry of the interface device 4006 may be dedicated to wired communications.

The computing device 4000 may include battery/power circuitry 4008. The battery/power circuitry 4008 may include one or more energy storage devices (e.g., batteries or capacitors) and/or circuitry for coupling components of the computing device 4000 to an energy source separate from the computing device 4000 (e.g., AC line power).

The computing device 4000 may include a display device 4010 (e.g., multiple display devices). The display device 4010 may include any visual indicators, such as a heads-up display, a computer monitor, a projector, a touchscreen display, a liquid crystal display (LCD), a light-emitting diode display, or a flat panel display.

The computing device 4000 may include other input/output (I/O) devices 4012. The other I/O devices 4012 may include one or more audio output devices (e.g., speakers, headsets, earbuds, alarms, etc.), one or more audio input devices (e.g., microphones or microphone arrays), location devices (e.g., GPS devices in communication with a satellite-based system to receive a location of the computing device 4000, as known in the art), audio codecs, video codecs, printers, sensors (e.g., thermocouples or other temperature sensors, humidity sensors, pressure sensors, vibration sensors, accelerometers, gyroscopes, etc.), image capture devices such as cameras, keyboards, cursor control devices such as a mouse, a stylus, a trackball, or a touchpad, bar code readers, Quick Response (QR) code readers, or radio frequency identification (RFID) readers, for example.

The computing device 4000 may have any suitable form factor for its application and setting, such as a handheld or mobile computing device (e.g., a cell phone, a smart phone, a mobile internet device, a tablet computer, a laptop computer, a netbook computer, an ultrabook computer, a personal digital assistant (PDA), an ultra mobile personal computer, etc.), a desktop computing device, or a server computing device or other networked computing component.

One or more computing devices implementing any of the CPM support modules or methods disclosed herein may be part of a CPM support system. FIG. 5 is a block diagram of an example CPM support system 5000 in which some or all of the CPM support methods disclosed herein may be performed, in accordance with various embodiments. The CPM support modules and methods disclosed herein (e.g., the CPM support module 1000 of FIG. A and the methods 2000, 2005, and 2015 of FIGs. 2A-C) may be implemented by one or more of the CPM 5010, the user local computing device 5020, the service local computing device 5030, or the remote computing device 5040 of the CPM support system 5000.

Any of the CPM 5010, the user local computing device 5020, the service local computing device 5030, or the remote computing device 5040 may include any of the embodiments of the computing device 4000 discussed herein with reference to FIG. 4, and any of the CPM 5010, the user local computing device 5020, the service local computing device 5030, or the remote computing device 5040 may take the form of any appropriate ones of the embodiments of the computing device 4000 discussed herein with reference to FIG. 4.

The CPM 5010, the user local computing device 5020, the service local computing device 5030, or the remote computing device 5040 may each include a processing device 5002, a storage device 5004, and an interface device 5006. The processing device 5002 may take any suitable form, including the form of any of the processing devices 4002 discussed herein with reference to FIG. 4, and the processing devices 5002 included in different ones of the CPM 5010, the user local computing device 5020, the service local computing device 5030, or the remote computing device 5040 may take the same form or different forms. The storage device 5004 may take any suitable form, including the form of any of the storage devices 5004 discussed herein with reference to FIG. 4, and the storage devices 5004 included in different ones of the CPM 5010, the user local computing device 5020, the service local computing device 5030, or the remote computing device 5040 may take the same form or different forms. The interface device 5006 may take any suitable form, including the form of any of the interface devices 4006 discussed herein with reference to FIG. 4, and the interface devices 5006 included in different ones of the CPM 5010, the user local computing device 5020, the service local computing device 5030, or the remote computing device 5040 may take the same form or different forms.

The CPM 5010, the user local computing device 5020, the service local computing device 5030, and the remote computing device 5040 may be in communication with other elements of the CPM support system 5000 via communication pathways 5008. The communication pathways 5008 may communicatively couple the interface devices 5006 of different ones of the elements of the CPM support system 5000, as shown, and may be wired or wireless communication pathways (e.g., in accordance with any of the communication techniques discussed herein with reference to the interface devices 4006 of the computing device 4000 of FIG. 4). The particular CPM support system 5000 depicted in FIG. 5 includes communication pathways between each pair of the CPM 5010, the user local computing device 5020, the service local computing device 5030, and the remote computing device 5040, but this "fully connected" implementation is simply illustrative, and in various embodiments, various ones of the communication pathways 5008 may be absent. For example, in some embodiments, a service local computing device 5030 may not have a direct communication pathway 5008 between its interface device 5006 and the interface device 5006 of the CPM 5010, but may instead communicate with the CPM 5010 via the communication pathway 5008 between the service local computing device 5030 and the user local computing device 5020 and the communication pathway 5008 between the user local computing device 5020 and the CPM 5010.

The user local computing device 5020 may be a computing device (e.g., in accordance with any of the embodiments of the computing device 4000 discussed herein) that is local to a user of the CPM 5010. In some embodiments, the user local computing device 5020 may also be local to the CPM 5010, but this need not be the case; for example, a user local computing device 5020 that is in a user's home or office may be remote from, but in communication with, the CPM 5010 so that the user may use the user local computing device 5020 to control and/or access data from the CPM 5010. In some embodiments, the user local computing device 5020 may be a laptop, smartphone, or tablet device. In some embodiments the user local computing device 5020 may be a portable computing device.

The service local computing device 5030 may be a computing device (e.g., in accordance with any of the embodiments of the computing device 4000 discussed herein) that is local to an entity that services the CPM 5010. For example, the service local computing device 5030 may be local to a manufacturer of the CPM 5010 or to a third-party service company. In some embodiments, the service local computing device 5030 may communicate with the CPM 5010, the user local computing device 5020, and/or the remote computing device 5040 (e.g., via a direct communication pathway 5008 or via multiple "indirect" communication pathways 5008, as discussed above) to receive data regarding the operation of the CPM 5010, the user local computing device 5020, and/or the remote computing device 5040 (e.g., the results of self-tests of the CPM 5010, calibration coefficients used by the CPM 5010, the measurements of sensors associated with the CPM 5010, etc.). In some embodiments, the service local computing device 5030 may communicate with the CPM 5010, the user local computing device 5020, and/or the remote computing device 5040 (e.g., via a direct communication pathway 5008 or via multiple "indirect" communication pathways 5008, as discussed above) to transmit data to the CPM 5010, the user local computing device 5020, and/or the remote computing device 5040 (e.g., to update programmed instructions, such as firmware, in the CPM 5010, to initiate the performance of test or calibration sequences in the CPM 5010, to update programmed instructions, such as software, in the user local computing device 5020 or the remote computing device 5040, etc.). A user of the CPM 5010 may utilize the CPM 5010 or the user local computing device 5020 to communicate with the service local computing device 5030 to report a problem with the CPM 5010 or the user local computing device 5020, to request a visit from a technician to improve the operation of the CPM 5010, to order consumables or replacement parts associated with the CPM 5010, or for other purposes.

The remote computing device 5040 may be a computing device (e.g., in accordance with any of the embodiments of the computing device 4000 discussed herein) that is remote from the CPM 5010 and/or from the user local computing device 5020. In some embodiments, the remote computing device 5040 may be included in a datacenter or other large-scale server environment. In some embodiments, the remote computing device 5040 may include network-attached storage (e.g., as part of the storage device 5004). The remote computing device 5040 may store data generated by the CPM 5010, perform analyses of the data generated by the CPM 5010 (e.g., in accordance with programmed instructions), facilitate communication between the user local computing device 5020 and the CPM 5010, and/or facilitate communication between the service local computing device 5030 and the CPM 5010.

In some embodiments, one or more of the elements of the CPM support system 5000 illustrated in FIG. 5 may not be present. Further, in some embodiments, multiple ones of various ones of the elements of the CPM support system 5000 of FIG. 5 may be present. For example, a CPM support system 5000 may include multiple user local computing devices 5020 (e.g., different user local computing devices 5020 associated with different users or in different locations). In another example, a CPM support system 5000 may include multiple CPMs 5010, all in communication with service local computing device 5030 and/or a remote computing device 5040; in such an embodiment, the service local computing device 5030 may monitor these multiple CPMs 5010, and the service local computing device 5030 may cause updates or other information may be "broadcast" to multiple scientific instruments 5010 at the same time. Different ones of the CPMs 5010 in a CPM support system 5000 may be located close to one another (e.g., in the same room) or farther from one another (e.g., on different floors of a building, in different buildings, in different cities, etc.). In some embodiments, a CPM 5010 may be connected to an Internet-of-Things (IoT) stack that allows for command and control of the CPM 5010 through a web-based application, a virtual or augmented reality application, a mobile application, and/or a desktop application. Any of these applications may be accessed by a user operating the user local computing device 5020 in communication with the CPM 5010 by the intervening remote computing device 5040. In some embodiments, a CPM 5010 may be sold by the manufacturer along with one or more associated user local computing devices 5020 as part of a CPM computing unit 5012.

The techniques disclosed above are further described according to the non-limiting examples provided below. Acquisition area selection in Cryo-EM is a tedious and repetitive task carried out by human operators. At a certain point during session preparation, a user may select candidate areas for data acquisition (e.g. foil holes) using Ul tools like brushes or erasers. The purpose of this step is to remove "obviously" bad areas that would result in useless data or even thwart the successful execution of the acquisition recipe.

In embodiments, a machine-learning model (e.g., or other model) may be used to automatically perform the task of selection of candidate areas for data acquisition. The machine-learning model may be trained (e.g., configured) and subsequently used to automatically select candidate areas. The machine-learning model may be trained based on processing (e.g., refinement, augmentation) of training data (e.g., expert supervised selection data and associated imaging). In embodiments, the machine-learning model may be trained as a binary classifier. Alternatively or additionally, the machine-learning model may be trained as a fully convolutional neural network configured to output of map of predictions/classifications.

In the training stage, selection data from past sessions may be collected. The data may include a set of grid square images. The selection data may include a list of foil hole IDs and coordinates. The selection data may include a Boolean flag "selected/not selected" per foil hole. The selection data may include additional metadata like foil hole diameter, pixel size, etc.

The training data may be processed in a variety of ways to improve the training of the machine-learning model. For each foil hole, a cropped image may be determined by taking a cropped portion from a grid square image. The cropped image may be centered at the foil hole. The target crop size may be calculated from the pixel size, such that the crop always has the same physical size. Furthermore, the size may be chosen to include a significant amount of surrounding area (e.g., 5 hole diameters).

Each cropped image may be paired with a label "selected" (e.g., 1) or "not selected" (e.g., 0) according to the session metadata. For example, the session metadata may comprise an indication of whether the foil hole at the center of the cropped image was selected by a user or not selected.

In embodiments, the cropped image may be further cropped after additional processing to the cropped image. The cropped images may be rotated, zoomed, flipped, and/or the like (e.g., for data augmentation) to virtually increase the size of the dataset for training. The initial crop size may be chosen larger to ensure that padding artefacts are reliably removed when cropping to the target crop size. For example, if the initial crop is 2*sqrt(2) times larger than the final crop, zooming by 0.5x and arbitrary rotation will not produce padding artefacts in the final images.

The cropped image may be normalized. The gray values in each cropped image may be normalized using the statistics of the whole grid square image. For example, the cropped image may be normalized based on a histogram. The cropped image may be normalized by dividing with the 90th gray value percentile (e.g., to make the data robust against hot pixels). This approach may preserve gray values in a cropped image relative to the grid square gray. The gray values may carry relevant information and should not be normalized away as would be the case if per-cropped image statistics were used.

The training data may be processed to generate a data set that is robust against varying hole sizes and spacings in grids. Data augmentation may be performed (e.g., zoom between 0.5x to 2x and arbitrary rotation and flips) to make the machine-learning model robust against these variations. Data augmentation may comprise modifying a cropped image to generate a plurality of cropped images. Data augmentation may comprise zooming one or more cropped images (e.g., after the initial crop, before the final crop) between 0.5x to 2x. Data augmentation may comprise arbitrarily (e.g., using an algorithm) rotating one or more cropped images. Data augmentation may comprise arbitrarily (e.g., using an algorithm) flipping (e.g., inverting, mirroring) one or more cropped images. The data augmentation may result in each image that is processed being used to generate a plurality of images (e.g., of various zooms, rotations, flipped orientations). Data augmentation may comprise applying noise, such as Poisson noise.

The training data may be processed to perform label smoothing. To avoid overfitting to labels (e.g., flawed labels), the label values 0 and 1 may be replaced with p and 1-p, respectively, where p<1 (e.g., p=0.1). For example, 0/1 labels may be replaced with 0.1/0.9 labels.

The labels for the cropped images labels may be modified (e.g., "cleaned up") based on a label cleaning process by training the machine-learning model with a subset of the data. Predictions from a larger data subset may be generated. Predictions that are incorrect may be inspected. The labels may be corrected (e.g., from selected to deselected and vice versa) if necessary. This process may boost the network performance and reduce the "confusion" by wrong labels.

In some implementations, the machine-learning model may be further customized for a specific application. For narrow use cases (e.g., Pharma), the network architecture, the training data, and the hyperparameters can be chosen for optimized performance in that specific case, compared to a fully generic solution that is built to work for a broad range of grid types, samples, etc. Furthermore, the machine-learning model parameters may be used to initialize (e.g., via "transfer learning") a neural network that is dynamically retrained to perform fine selection of good foil holes, operating on the same set of inputs (e.g., cropped patches from grid square images).

During the operational stage (e.g., at inference time), the machine-learning model may be integrated into a practical application, such as assisting in data selection in charged particle microscope (CPM) imaging. A computing device may acquire (e.g., using data acquisition software) a grid square image and detecting locations of foil holes. After acquiring a grid square image and detecting locations of foil holes, the computing device may send image and metadata to an area selection service (e.g., foil hole selection service) configured to determine one or more areas to use for performing at least one operation. The at least one operation may comprise a data acquisition operation, such as obtaining a higher resolution image than an image input to the machine-learning model. The at least one operation may comprise a data analysis operation (e.g., analysis of the higher resolution image data acquired). The area selection service crops areas of the grid square image to generate a plurality of cropped images. A cropped image may be centered on a specific candidate area, such as a foil hole. A cropped image may include more than the candidate area, such as an area surrounding the candidate area. Each cropped image is input into the machine-learning model. The machine-learning model processes the cropped image and generates a prediction. The prediction may be a prediction between 0 and 1. The prediction may be a prediction of whether the candidate area is a target (e.g., is optimal, should be selected) for analysis.

A threshold (e.g., a fixed or user-selected threshold) may be used to binarize the predictions. For instance, to avoid false negatives (deselection of good areas), a threshold (e.g., 0.2, 0.8) can be chosen. Any predictions above the threshold may be indicated as selected areas. The binarized predictions may be sent back to the service and/or computing device that provided the request. The service and/or computing device may update the selections and proceed with analysis of imaging data in the selected areas. In embodiments, further application-specific filters may be applied (e.g., by the requesting service, or the area selection service, to remove small clusters to reduce stage move overhead).

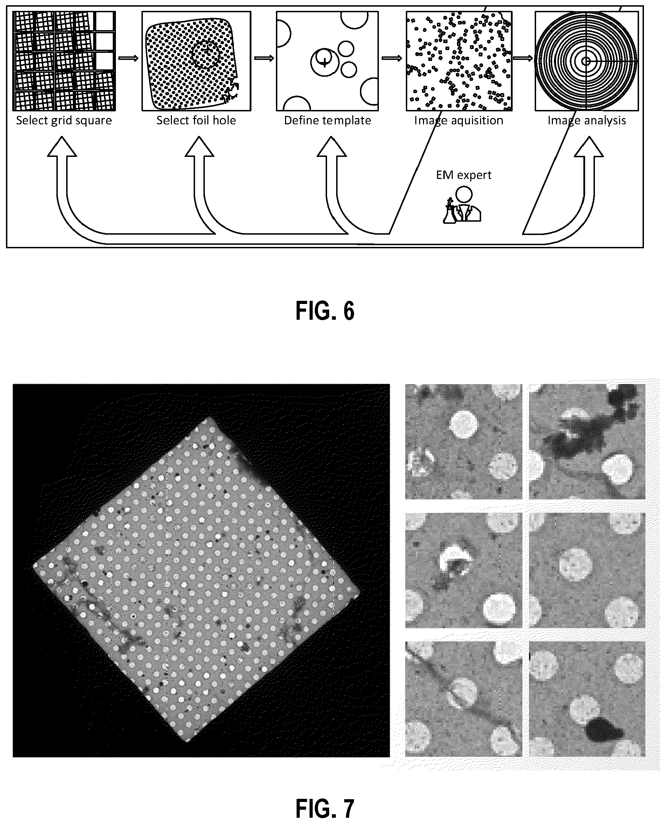

FIG. 6 is a diagram of a charged particle microscope (CPM) imaging process. The process may include a plurality of stages, such as selection of a grid square from an image comprising a plurality of grid squares, selection of areas (e.g., foil hole) in the grid square, defining of a template, image acquisition, and image analysis (e.g., sample analysis).

The process shown in FIG. 6 may be part of a single particle analysis Cryo-EM workflow. A critical workflow component is data collection. Creating high-resolution 3D reconstructions of biological macromolecules requires vast quantities of data. An acquisition service (e.g., acquisition software) may be used to semi-automatically collect thousands of 'particle' images, the particles being the macromolecules of interest. A long-standing desire is to fully automate this process. One bottleneck is the selection of images to acquire. In the conventional approach, once the grid is placed in the microscope, the user must select grid squares. The user also selects foil holes (e.g., selectable areas) within a selected grid square. Then, particle images are taking within the foil holes. Because of contamination, bad foil holes must be avoided. Currently, the user manually selects these in a very tedious process. As disclosed further herein, a machine-learning model may be used to automatically select areas of selected grid squares (e.g., and/or grid squares from a grid). The selected areas may be used for image acquisition and/or analysis of samples associated with the selected areas.

FIG. 7 shows an example cryo-EM grid square image (left side) and individual cropped images taken from the example grid square (right side). These show contaminations on the sample image that may obscure areas of the imaging data (e.g., foil holes). The reasoning for what is selected and what is not selected is difficult to define in terms of rules for building a model. The disclosed machine-learning techniques allow for machine-learning training processes to generate a machine-learning model configured to automatically select and/or deselect areas for further sample analysis.

FIG. 8 is an example grid cryo-EM grid square image showing selection of foil holes for further sample analysis. The example grid square image has dimensions of 4096 x 4096 pixels, but images of any dimensions and/or pixel configuration may be used. An acquisition service may analyze the grid square image to determine locations of selectable areas (e.g., foil holes). As an example, the locations of selectable areas may comprise coordinates (e.g., [x, y] coordinate pairs). In some scenarios, about 500 to 1000 coordinates may be determined. The selectable areas may be assigned labels, such as true/false or selected/not selected. The labels may be assigned based on input from a user. The acquisition service may cause the grid square image, the coordinate pairs, coordinates, labels to be stored. The storage may later be access for training a machine-learning model as disclosed herein.

FIG. 9 is an example grid cryo-EM grid square image showing selection of a subsection of the image to determine a cropped image. A plurality of cropped images may be generated by determining a cropped image for each selectable area (e.g., foil hole). The selectable area associated with the cropped image may be at center of the cropped image. The cropped image may be a fixed size around the selectable area (e.g., foil hole). Each image may be normalized and paired with a label (e.g., as an (image, label) pair).

This process may result in 100s of training data examples per grid square. If the training data included only images from a single grid square, this may result in low diversity. The training data may be generated based on many different grid square images, from different microscopes, from different samples, from different user operators, and/or the like. As an example, 69 grid squares were converted to 60125 examples (e.g., 21527 positively labelled, 38598 negatively labelled) to purposes of testing the disclosed techniques. It should be understood that any number may be used as appropriate.

FIG. 10 is a block diagram of an example an example machine-learning model. The machine-learning model may comprise a computational neural network, such as a ResNet neural network. In embodiments, ResNet-18, ResNet-34 and/or other variations may be used as appropriate. As shown in the figure, a cropped image may be input into the machine-learning model. Various layers (e.g., convolutional layers) may be used by the machine-learning model to classify the cropped image. The machine-learning model may be configured as binary classifier that classifies an image in one of two categories (e.g., true/false, selected/not-selected). In embodiments, the machine-learning model may be stored in ONNX (Open Neural Network eXchange) format. The machine-learning model be implemented by an area selection service (e.g., or inference service) hosted on a network, such as on a cloud computing platform.

FIG. 11 shows an example user interface and related code snippet for label correction. Training data may include incorrect labels, for example, due to user error. If the label in the training data does not match a predicted label, then the label may be flagged for review and/or automatically corrected. In embodiments, the flagged cropped images may be shown along with the original label. A review may provide an indication of whether to keep the original label or change the original label. The user input may be used to correct the labels for training of an updated machine-learning model.

FIG. 12 is a diagram illustrating challenges related to noise in labels. The goal of the user selecting the areas of the image data may vary resulting in some images having more accurate selections than others. Workflow parameters (e.g., tilt, focus method, beam size, template) may cause variations in accuracy. Operator personal taste (e.g., such how close a contamination can be to a foil hole) may cause variations in accuracy. Prior knowledge (e.g., ice too thick/thin) or lack thereof may cause variations in accuracy. The disclosed techniques may allow for questionable labels to be detected and corrected as disclosed further herein.

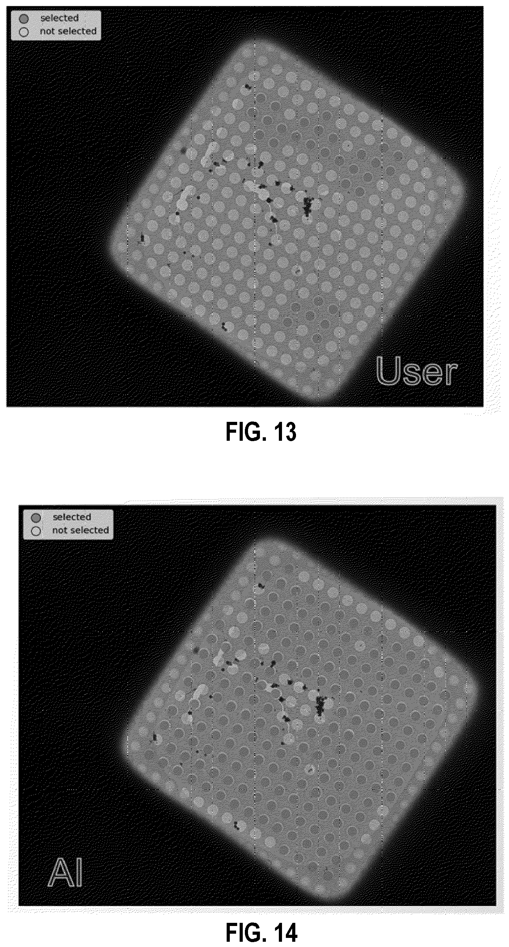

FIG. 13 shows an image with a user selection of areas of a grid square. FIG. 14 is another view of the image of FIG. 13 using the disclosed machine-learning model to automatically select areas of a grid square. These figures illustrate that the disclosed machine-learning techniques may improve the accuracy of selecting areas for sample analysis.

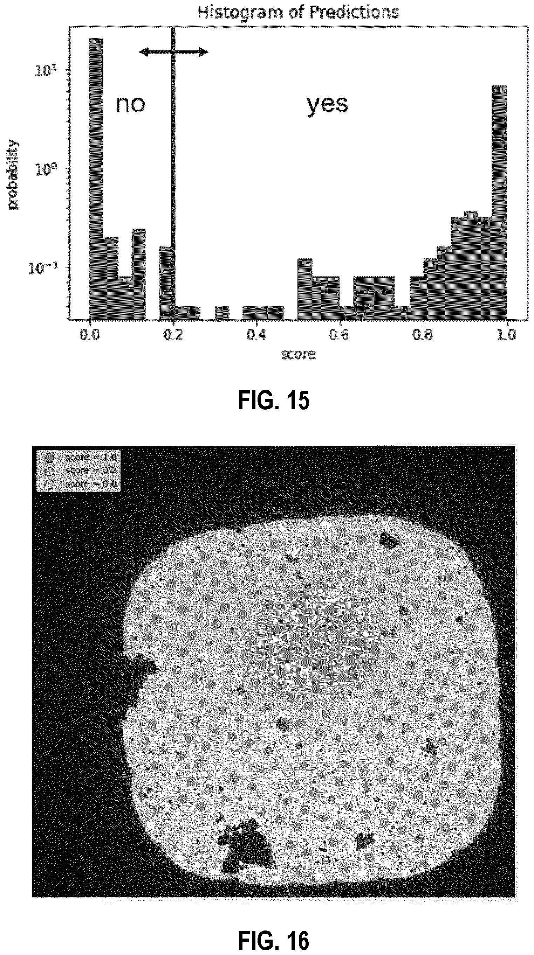

FIG. 15 is a histogram showing predictions of area selections. A threshold is shown indicating that scores above the threshold may be determined as a selection of an area. Scores below the threshold may be determined as areas that are not selected. The threshold may be adjusted by a user. For example, the scores between 0 and 1 may be sent to an acquisition service operated by a user. The user may adjust the threshold with an input, such as a slider. The user interface may update an image showing selections according to the adjustments in threshold. FIG. 16 shows an example grid square image where the opacity of the circles (e.g., placed over foil holes) is used to represent the probability of selection per area, together with a few examples of (opacity, probability) pairs.

In embodiments, the disclosed techniques may be used to initialize a second network that processes a whole grid square image at once and produces a map (e.g., a "heatmap," instead of individual areas / foil holes individually). Based on this map, areas may be selected in a secondary step (e.g., by defining selection regions / non-selected regions).

FIG. 17 is a diagram showing a first machine-learning model in accordance with the present techniques that operates as a convolutional network. The first machine-learning model may be configured as a binary classifier. The first machine-learning model may be configured to classify an area of an image within a range (e.g., from 0 to 1). The number in the range may be compared to a threshold to determine between two options (e.g., true/false, selected/not selected, 0/1).

FIG. 18 is a diagram showing a second machine-learning model in accordance with the present techniques that operates a fully convolutional neural network. As shown by FIG. 17 (e.g., scissor indicates modification of layers) and FIG. 18, the first machine-learning model may be converted to the second machine-learning model. The first machine-learning model may be converted to the second machine-learning model after training of the first machine-learning model. Converting the first machine-learning model to the second machine-learning model may comprise replacing a global pooling layer and/or fully connected layer of the first machine-learning model with an average pooling layer and/or a convolution layer. Converting the first machine-learning model to the second machine-learning model to comprise copying all weights of all common layers from the first machine-learning model to the second machine-learning model. The new layers of second machine-learning model (e.g., after copying, "after the cut") may be initialized randomly and (optionally or additionally) re-trained. One or more of the last few layers of the second machine-learning model may be replaced. Converting the first machine-learning model to the second machine-learning model may comprise copying weight values (e.g., or bias values) from a fully connected layers of the first machine-learning model to 1x1 convolutional layers of the second machine-learning model, replacing, at least in part, the first layer. As a further explanation, a fully connected layer for a neural network may be converted to a 1x1 convolutional layer. The fully connected layer may be removed. A 1x1 convolutional layer (e.g., which has the same number of inputs and outputs as the fully connect layer) may be created. The weights of the fully connection layer may be used (e.g., copied) as weights for the 1x1 convolutional layer. The 1x1 convolutional layer may be the same as a fully connected layer that slides across the image. The process may convert the network to a fully convolutional network. The second machine-learning model may be trained and/or configured to generate a map of varying probabilities of locations being targets (e.g., being optimal) for analysis. The map may indicate regions of selection and/or non-selection.

The second machine-learning-model may be more efficient than the first machine-learning-model. The first machine-learning model may have duplicate work due to overlap in the foil hole crops. The second machine-learning model may have an algorithm complexity that scales with image size, not number of foil holes. For example, testing an example model indicates the second machine-learning model may be about 100 times faster than the first machine-learning model (e.g., 2 seconds vs 2 minutes).

The second machine-learning model may be configured to indicate regions of selection/non-section (e.g., including multiple foil holes) of the input grid square image. The second machine-learning model may allow for leveraging connectivity between selected regions. For example, computer vision algorithms may be applied, such as hole filling, dilation, and/or the like, to smooth the regions. The selectable areas (e.g., foil holes) within a selected region may be determined as selected based on being located within a region (e.g., or not-selected based on being outside of any selected region). The selectable areas may be selected based on the quality assigned to the region. The quality may be a simple binary quality or a value within a range. A threshold may be applied to the quality and/or other technique to determine whether a selectable area within a region is selected or not.

The following paragraphs provide various examples of the embodiments disclosed herein.

Example 1 is a method comprising: determining, based on selection data indicating selections of areas of microscopy imaging data, training data for a machine-learning model; training, based on the training data, the machine-learning model to automatically determine one or more areas of microscopy imaging data for performing at least one operation; and causing a computing device to be configured to use the machine-learning model to automatically determine areas of microscopy imaging data for performing the at least one operation.

Example 2 includes the subject matter of Example 1, and further specifies that the selection data comprises coordinates of selected holes of a plurality of holes of a section of a grid mesh.

Example 3 includes the subject matter of any one of Examples 1-2, and further specifies that the determining the training data comprises generating, based on modifying a microscopy image, a plurality of training images.

Example 4 includes the subject matter of Example 3, and further specifies that the modifying the microscopy image comprises one or more of rotating, scaling, translating, applying a point spread function, or applying noise (e.g., Poisson noise).

Example 5 includes the subject matter of any one of Examples 3-4, and further specifies that the modifying the microscopy image comprises zooming in or out to emulate different hole sizes.

Example 6 includes the subject matter of any one of Examples 3-5, and further specifies that the modifying the microscopy image comprises applying an optical transform to one of change focus or blur the microscopy image.

Example 7 includes the subject matter of any one of Examples 1-6, and further specifies that the determining the training data comprises determining a histogram of image intensity data of the training data, determining a normalization factor based on a percentage of the histogram, and normalizing the training data based on the normalization factor.

Example 8 includes the subject matter of any one of Examples 1-7, and further specifies that the determining the training data comprises determining a first crop of a microscopy image, modifying at least a portion of image data in the first crop, and determining a second crop of the first crop.

Example 9 includes the subject matter of any one of Examples 1-8, and further specifies that the machine-learning model comprises one or more of a neural network or a fully convolutional neural network.

Example 10 includes the subject matter of any one of Examples 1-9, and further includes converting the machine-learning model from a convolutional neural network to a fully convolutional neural network.

Example 11 includes the subject matter of Example 10, and further specifies that the converting the machine-learning model is after training of the machine-learning model.

Example 12 includes the subject matter of any one of Examples 10-11, and further specifies that the converting the machine-learning model comprises replacing a global pooling layer and fully connected layer of the convolutional neural network with an average pooling layer and a convolution layer.

Example 13 includes the subject matter of any one of Examples 10-12, and further specifies that the converting the machine-learning model comprises copying one or more of weight values or bias values from fully connected layers of the convolutional neural network to convolutional layers in another network.

Example 14 includes the subject matter of any one of Examples 1-13, and further specifies that the one or more areas of the microscopy imaging data each comprise a single foil hole.

Example 15 includes the subject matter of any one of Examples 1-14, and further specifies that the one or more of the areas of the microscopy imaging data each comprise a plurality of holes in a grid section of a grid mesh.

Example 16 includes the subject matter of any one of Examples 1-15, and further specifies that the machine-learning model is trained to generate a map of varying probabilities of locations being targets for performing the at least one operation.

Example 17 includes the subject matter of any one of Examples 1-16, and further specifies that the machine-learning model is trained to provide an indication of whether an area is selected or not selected for performing the at least one operation. Additionally or alternatively, Example 17 further specifies that the at least one operation comprises one or more of a data acquisition operation, a data analysis operation, acquiring additional imaging data having a higher resolution that the microscopy imaging data, or analyzing the additional imaging data.

Example 18 is a method comprising: receiving microscopy imaging data and location data indicating sample locations relative to the microscopy imaging data; determining, based on a machine-learning model and the location data, one or more areas of the microscopy imaging data for performing at least one operation; and causing display, on a display device, data indicative of the determined one or more areas of the microscopy imaging data.

Example 19 includes the subject matter of Example 18, and further specifies that the microscopy imaging data and the location data are received by a first computing device from a second computing device.

Example 20 includes the subject matter of any one of Examples 18-19, and further specifies that the microscopy imaging data and the location data are received via one or more of a network or a storage device.

Example 21 includes the subject matter of any one of Examples 18-20, and further specifies that the microscopy imaging data and the location data are received in response to an operation of a microscopy device.

Example 22 includes the subject matter of Example 21, and further specifies that the operation of the microscopy device comprises charged particle microscopy image acquisition.

Example 23 includes the subject matter of any one of Examples 18-22, and further specifies that the location data comprises coordinates of holes in a grid section of a grid mesh.

Example 24 includes the subject matter of any one of Examples 18-23, and further specifies that the machine-learning model is trained based on selection data indicating selections of areas of microscopy imaging data.

Example 25 includes the subject matter of Example 24, and further specifies that the selection data comprises coordinates of selected holes in a section of a grid mesh.

Example 26 includes the subject matter of any one of Examples 18-25, the machine-learning model may be trained based on automatically generated training data.

Example 27 includes the subject matter of Example 26, and further specifies that the automatically generated training data comprises a plurality of training images generated based on modifying a microscopy image.

Example 28 includes the subject matter of Example 27, and further specifies that modifying the microscopy image comprises one or more of rotating, scaling, translating, applying a point spread function, or applying noise (e.g., Poisson noise).

Example 29 includes the subject matter of any one of Examples 27-28, and further specifies that modifying the microscopy image comprises zooming in or out to emulate different hole sizes.

Example 30 includes the subject matter of any one of Examples 27-29, and further specifies that modifying the microscopy image comprises applying an optical transform to one of change focus or blur the microscopy image.

Example 31 includes the subject matter of any one of Examples 26-30, and further specifies that the automatically generated training data comprises normalized training data.

Example 32 includes the subject matter of Example 31, and further specifies that the normalized training data is normalized based on determining a histogram of image intensity data of the training data, determining a normalization factor based on a percentage of the histogram, and normalizing the training data based on the normalization factor.

Example 33 includes the subject matter of any one of Examples 26-32, and further specifies that the automatically generated training data comprises cropped training data.

Example 34 includes the subject matter of Example 33, and further specifies that the cropped training data is cropped based on determining a first crop of a microscopy image, modifying at least a portion of image data in the first crop, and determining a second crop of the first crop.

Example 35 includes the subject matter of any one of Examples 18-24, and further specifies that the machine-learning model comprises one or more of a neural network or a fully convolutional neural network.

Example 36 includes the subject matter of any one of Examples 18-35, and further specifies that the machine-learning model comprises a fully convolutional neural network converted from a convolutional neural network.

Example 37 includes the subject matter of Example 36, and further specifies that the machine-learning model is converted to the fully convolutional neural network after training of the machine-learning model.

Example 38 includes the subject matter of any one of Examples 36-37, and further specifies that the machine-learning model is converted to the fully convolutional neural network based on replacing a global pooling layer and fully connected layer of the convolutional neural network with an average pooling layer and a convolution layer.

Example 39 includes the subject matter of any one of Examples 36-38, and further specifies that the machine-learning model is converted to the fully convolutional neural network based on copying one or more of weight values or bias values from fully connected layers of the convolutional neural network to convolutional layers in another network.

Example 40 includes the subject matter of any one of Examples 18-39, and further specifies that the one or more areas of the microscopy imaging data each are only a single hole of a plurality of holes in a grid section of a mesh grid.

Example 41 includes the subject matter of any one of Examples 18-40, and further specifies that the one or more of the areas of the microscopy imaging data each comprise a plurality of holes in a grid section of a mesh grid.

Example 42 includes the subject matter of any one of Examples 18-41, and further specifies that the machine-learning model is trained to generate a map indicating varying probabilities of locations being targets for analysis.

Example 43 includes the subject matter of any one of Examples 18-42, and further specifies that the machine-learning model is trained to provide an indication of whether an area is selected or not selected for performing the at least one operation.

Example 44 includes the subject matter of any one of Examples 18-43, and further specifies that the causing display comprises sending, via a network to the display device, the data indicative of the determined one or more areas of the microscopy imaging data.

Example 45 includes the subject matter of any one of Examples 18-44, and further specifies that the data indicative of the determined one or more areas of the microscopy imaging data comprises a map indicating varying probabilities of locations being targets for performing the at least one operation.

Example 46 includes the subject matter of any one of Examples 18-45, and further specifies that the data indicative of the determined one or more areas of the microscopy imaging data comprises an indication of a subset of holes (e.g., in the one or more areas) selected from a plurality of holes in a grid section of a mesh grid. Additionally or alternatively, Example 46 further specifies that the at least one operation comprises one or more of a data acquisition operation, a data analysis operation, acquiring additional imaging data having a higher resolution that the microscopy imaging data, or analyzing the additional imaging data.

Example 47 is a method comprising: generating, based on operating a microscopy device, microscopy imaging data and location data indicating sample locations relative to the microscopy imaging data; sending, to a computing device, the microscopy imaging data and the location data, wherein the computing device comprises a machine-learning model; receiving, from the computing device and based on the location data and a determination of the machine-learning model, data indicating one or more areas of the microscopy imaging data; and causing at least one operation to be performed based on the data indicating one or more areas of the microscopy imaging data.

Example 48 includes the subject matter of Example 47, and further specifies that the generating the microscopy imaging data comprises performing charged particle microscopy on a sample located in a mesh grid comprising one or more sections of a plurality of holes.

Example 49 includes the subject matter of any one of Examples 47-48, and further specifies that the machine-learning model is trained based on selection data indicating selections of areas of microscopy imaging data.

Example 50 includes the subject matter of Example 49, and further specifies that the selection data comprises coordinates of selected holes in a section of a grid mesh.

Example 51 includes the subject matter of any one of Examples 47-50, and further specifies that the machine-learning model is trained based on automatically generated training data.

Example 52 includes the subject matter of Example 51, and further specifies that the automatically generated training data comprises a plurality of training images generated based on modifying a microscopy image.

Example 53 includes the subject matter of Example 52, and further specifies that modifying the microscopy image comprises one or more of rotating, scaling, translating, applying a point spread function, or applying noise (e.g., Poisson noise).

Example 54 includes the subject matter of any one of Examples 52-53, and further specifies that modifying the microscopy image comprises zooming in or out to emulate different hole sizes.

Example 55 includes the subject matter of any one of Examples 52-54, and further specifies that modifying the microscopy image comprises applying an optical transform to one of change focus or blur the microscopy image.

Example 56 includes the subject matter of any one of Examples 51-55, and further specifies that the automatically generated training data comprises normalized training data.

Example 57 includes the subject matter of Example 56, and further specifies that the normalized training data is normalized based on determining a histogram of image intensity data of the training data, determining a normalization factor based on a percentage of the histogram, and normalizing the training data based on the normalization factor.

Example 58 includes the subject matter of any one of Examples 51-57, and further specifies that the automatically generated training data comprises cropped training data.

Example 59 includes the subject matter of Example 58, and further specifies that the cropped training data is cropped based on determining a first crop of a microscopy image, modifying at least a portion of image data in the first crop, and determining a second crop of the first crop.

Example 60 includes the subject matter of any one of Examples 47-59, and further specifies that the machine-learning model comprises one or more of a neural network or a fully convolutional neural network.

Example 61 includes the subject matter of any one of Examples 47-60, and further specifies that the machine-learning model comprises a fully convolutional neural network converted from a convolutional neural network.

Example 62 includes the subject matter of Example 61, and further specifies that the machine-learning model is converted to the fully convolutional neural network after training of the machine-learning model.

Example 63 includes the subject matter of any one of Examples 61-62, and further specifies that the machine-learning model is converted to the fully convolutional neural network based on replacing a global pooling layer and fully connected layer of the convolutional neural network with an average pooling layer and a convolution layer.

Example 64 includes the subject matter of any one of Examples 61-63, and further specifies that the machine-learning model is converted to a fully convolutional neural network based on copying one or more of weight values or bias values from fully connected layers of the convolutional neural network to convolutional layers in another network.

Example 65 includes the subject matter of any one of Examples 47-64, and further specifies that the one or more areas of the microscopy imaging data are each only a single hole of a plurality of holes in a grid section of a mesh grid.

Example 66 includes the subject matter of any one of Examples 47-65, and further specifies that the one or more of the areas of the microscopy imaging data each comprises a plurality of holes in a grid section of a mesh grid.

Example 67 includes the subject matter of any one of Examples 47-66, and further specifies that the machine-learning model is trained to generate a map indicating varying probabilities of locations being targets for analysis.

Example 68 includes the subject matter of any one of Examples 47-67, and further specifies that the machine-learning model is trained to provide an indication of whether an area is selected or not selected for analysis.

Example 69 includes the subject matter of any one of Examples 47-68, and further specifies that the receiving the data is in response to sending the microscopy imaging data and the location data.

Example 70 includes the subject matter of any one of Examples 47-69, and further specifies that the data indicating one or more areas of the microscopy imaging data comprises a map indicating varying probabilities of locations being targets for analysis.

Example 71 includes the subject matter of any one of Examples 47-70, and further specifies that the data indicating one or more areas of the microscopy imaging data comprises an indication of a subset of holes (e.g., in the one or more areas) selected from a plurality of holes in a grid section of a mesh grid.

Example 72 includes the subject matter of any one of Examples 47-71, and further specifies that the causing the at least one operation comprises using the one or more areas to perform one or more of data acquisition of higher resolution data than the microscopy imaging data, particle analysis, single particle analysis, generation of a representation of one or more particles.

Example 73 includes the subject matter of any one of Examples 47-72, and further specifies that the causing the at least one operation to be performed comprises causing one or more of storage of or transmission via a network of the data indicating one or more areas of the microscopy imaging data.

Example 74 includes the subject matter of any one of Examples 47-73, and further specifies that causing the at least one operation to be performed comprises causing output, via a display device, of results of analyzing the one or more areas of the microscopy imaging data.

Example 75 is a device comprising: one or more processors; and a memory storing instructions that, when executed by the one or more processors, cause the device to perform the methods of any one of Examples 1-74.

Example 76 is a non-transitory computer-readable medium storing instructions that, when executed by one or more processors, cause a device to perform the methods of any one of Examples 1-74.

Example 77 is a system comprising: a charged particle microscopy device configured to perform one or more microscopy operations; and a computing device comprising one or more processors, and a memory, wherein the memory stores instructions that, when executed by the one or more processors, cause the computing device to perform the methods of any one of Examples 1-74.

Example 78 is a charged particle microscopy support apparatus, comprising logic to perform the methods of any one of Examples 1-74.

Example 79 includes the subject matter of example 47, wherein the machine learning model is configured based on automatically generated training data, wherein the automatically generated training data comprises data modified based on one or more of rotating, scaling, translating, applying a point spread function, or applying noise.

Example 80 includes the subject matter of example 47, wherein the machine learning model comprises one or more of a neural network or a fully convolutional neural network.

Example 81 includes the subject matter of example 47, wherein the data indicating one or more areas of the microscopy imaging data comprises one or more of: a map indicating varying probabilities of locations being targets for performing the at least one operation, or an indication of a subset of holes selected from a plurality of holes in a grid section of a mesh grid.

Example A includes any of the CPM support modules disclosed herein.

Example B includes any of the methods disclosed herein.

Example C includes any of the GUIs disclosed herein.

Example D includes any of the CPM support computing devices and systems disclosed herein.

## Claims

1. A method comprising:
determining, based on selection data indicating selections of areas of microscopy imaging data, training data for a machine-learning model;
training, based on the training data, the machine-learning model to automatically determine one or more areas of microscopy imaging data for performing at least one operation; and
causing a computing device to be configured to use the machine-learning model to automatically determine areas of microscopy imaging data for performing the at least one operation.

2. The method of claim 1, wherein the determining the training data comprises generating, based on modifying a microscopy image, a plurality of training images, and wherein the modifying the microscopy image comprises one or more of rotating, scaling, translating, applying a point spread function, or applying noise.

3. The method of claim 1, wherein the determining the training data comprises determining a histogram of image intensity data of the training data, determining a normalization factor based on a percentage of the histogram, and normalizing the training data based on the normalization factor.

4. The method of claim 1, further comprising converting the machine-learning model from a convolutional neural network to a fully convolutional neural network.

5. The method of claim 4, wherein the converting the machine-learning model is after training of the machine-learning model.

6. The method of claim 1, wherein the machine-learning model is trained to generate a map of varying probabilities of locations being targets for performing the at least one operation.

7. The method of claim 1, wherein the at least one operation comprises one or more of a data acquisition operation, a data analysis operation, acquiring additional imaging data having a higher resolution that the microscopy imaging data, or analyzing the additional imaging data.

8. A method comprising:
receiving microscopy imaging data and location data indicating sample locations relative to the microscopy imaging data;
determining, based on a machine-learning model and the location data, one or more areas of the microscopy imaging data for performing at least one operation; and
causing display, on a display device, data indicative of the determined one or more areas of the microscopy imaging data.

9. The method of claim 8, wherein the microscopy imaging data and the location data are received in response to a charged particle microscopy image acquisition of a microscopy device.

10. The method of claim 8, wherein the machine-learning model is configured based on automatically generated training data, wherein the automatically generated training data comprises a plurality of training images generated based on modifying a microscopy image.

11. The method of claim 10, wherein modifying the microscopy image comprises one or more of rotating, scaling, translating, applying a point spread function, or applying noise.

12. The method of claim 10, wherein the automatically generated training data comprises normalized training data, and wherein the normalized training data is normalized based on determining a histogram of image intensity data of the training data, determining a normalization factor based on a percentage of the histogram, and normalizing the training data based on the normalization factor.

13. The method of claim 8, wherein the machine-learning model comprises one or more of a neural network or a fully convolutional neural network.

14. The method of claim 8, wherein the at least one operation comprises one or more of a data acquisition operation, a data analysis operation, acquiring additional imaging data having a higher resolution that the microscopy imaging data, or analyzing the additional imaging data.
